Europäisches Patentamt

European Patent Office

Office européen des brevets

(19)

(11) Publication number: **0 161 056**
**A2**

(12) # EUROPEAN PATENT APPLICATION

(21) Application number: **85302253.1**

(22) Date of filing: **01.04.85**

(51) Int. Cl.⁴: **F 16 K 5/20**

(30) Priority: **10.04.84 GB 8409226**

(43) Date of publication of application:
**13.11.85 Bulletin 85/46**

(84) Designated Contracting States:
**DE FR GB IT SE**

(71) Applicant: **M & D VALVES LIMITED**
**Unit 6, 2 South Avenue Clydebank Business Park**
**Clydebank, G81 2LE Scotland(GB)**

(72) Inventor: **MacLean, Malcolm Alexander**
**Unit 6, 2 South Avenue Clydebank Business Park**
**Clydebank, G81 2LE Scotland(GB)**

(72) Inventor: **McSorley, David**
**Unit 6, 2 South Avenue Clydebank Business Park**
**Clydebank, G81 2LE Scotland(GB)**

(74) Representative: **Szczuka, Jan Tymoteusz et al,**
**Cruikshank & Fairweather 19 Royal Exchange Square**
**Glasgow G1 3AE Scotland(GB)**

(54) **Ball valve.**

(57) The present invention provides a ball valve (1) comprising a valve body (2) having a valve chamber (3) with first and second openings (4, 5) at respective ends (6, 7) along a longitudinal axis $X - X$ of the valve (1), and a ball-shaped valve member (8) with a radially extending valve stem (14) adapted for rotation of said valve member (8) about an axis extending transversely of said longitudinal axis $X–X$. The valve member (8) has a spheroidal outer surface (22) interrupted by a generally central through-bore (11) extending transversely of the valve stem axis for movement into and out of communication with said first and second openings (4, 5) as said valve member (8) is rotated about the valve stem axis. Each of the first and second openings (4, 5) is provided with an annular sealing means (9, 10) formed and arranged for sealing engagement with the valve member outer surface (22) in a closed position of the valve (1). At least the sealing means (10) on an upstream side of the valve (1) is in the form of an annular sealing element (19) mounted in an annular seal support (15) in the valve body (2) so as to be reciprocably displacable along the longitudinal valve axis $X–X$ between a sealing position in which the sealing element (19) is held in sealing engagement with the valve member outer surface (22) and a retracted position, in which the sealing element is held spaced from the outer surface. A seal support-drive (30) is formed and arranged for applying a driving force to the seal support (15), at least in the upstream direction for retraction of the seal support (15) towards its retracted position.

EP 0 161 056 A2

./...

FIG.1

## BALL VALVE

The present invention relates to a ball valve and in particular to ball valves suitable for use in oil and gas well pipelines and in petrochemical plant.

Ball valves are relatively widely used in oil-well pipelines but due to the relatively high operating pressures involved and more particularly the relatively heterogeneous nature of crude oil recovered from most oil-wells the oil often containing significant amounts of particulate matter the relatively soft seals used for sealing between the valve openings and the ball shaped valve member are subject to frequent damage resulting in significant down-time and costly maintenance involving substantial dismantling of the valve.

It is an object of the present invention to avoid or minimize one or more of the above disadvantages.

The present invention provides a ball valve comprising a valve body having a valve chamber with first and second openings at respective ends along a longitudinal axis of the valve, and a ball-shaped valve member with a radially extending valve stem adapted for rotation of said valve member about an axis extending transversely of said longitudinal axis, said valve member having a spheroidal outer surface interrupted by a generally central through-bore extending transversely of the valve stem axis for movement into and out of communication with said first and second openings as said valve member is rotated about the valve stem axis, each of said first and second openings being provided with an annular sealing means formed and arranged for sealing engagement with the valve member outer surface in a closed position of the valve wherein at least said sealing means on an upstream side of the valve is in the form of an annular sealing element mounted in an annular seal support mounted in said valve body so as to be reciprocably displacable along the longitudinal valve axis between a sealing position in which said sealing element is held in sealing engagement with said valve member outer surface and a retracted position, in which said sealing element is held spaced from said outer surface, a seal support-drive means is formed and arranged for applying a driving force to said seal support, at least in the upstream direction for retraction of said seal support towards its retracted position.

With a ball valve of the present invention the possibility of damage to the valve seals is substantially reduced leading to a corresponding increase in effective life and decrease in down time. Moreover opening and closing of the valve is made much easier with the result that the valve control means can be significantly downrated resulting in further important economies of construction.

Conveniently the drive means comprises a piston means connected to the seal support and reciprocably displacable in a chamber connected to a pressurized fluid supply. Most conveniently the piston and chamber means is formed and arranged to operate as a double action piston. Desirably the downstream side sealing means also is of similar form to the upstream side sealing means.

With the latter type of arrangement it will be appreciated that a balanced driving force can be applied to each side of the valve member so that it is accurately positioned with respect to the valve stem. This in turn has the further advantage of facilitating the use of a back seat sealing means on the valve stem to act as a safeguard against leakage of pressurized oil or other fluid upon removal of the valve stem access canopy when the valve has been accidentally left part open. In such cases the valve stem is forced upwards away from the valve member into a sealing position, correct subsequent re-engagement of the valve stem with the valve member being ensured by the accurate positioning of the valve member as will be further explained hereinbelow.

Further preferred features and advantages of the invention will appear from the following detailed description given by way of example of a preferred embodiment illustrated with reference to the accompanying drawing in which:

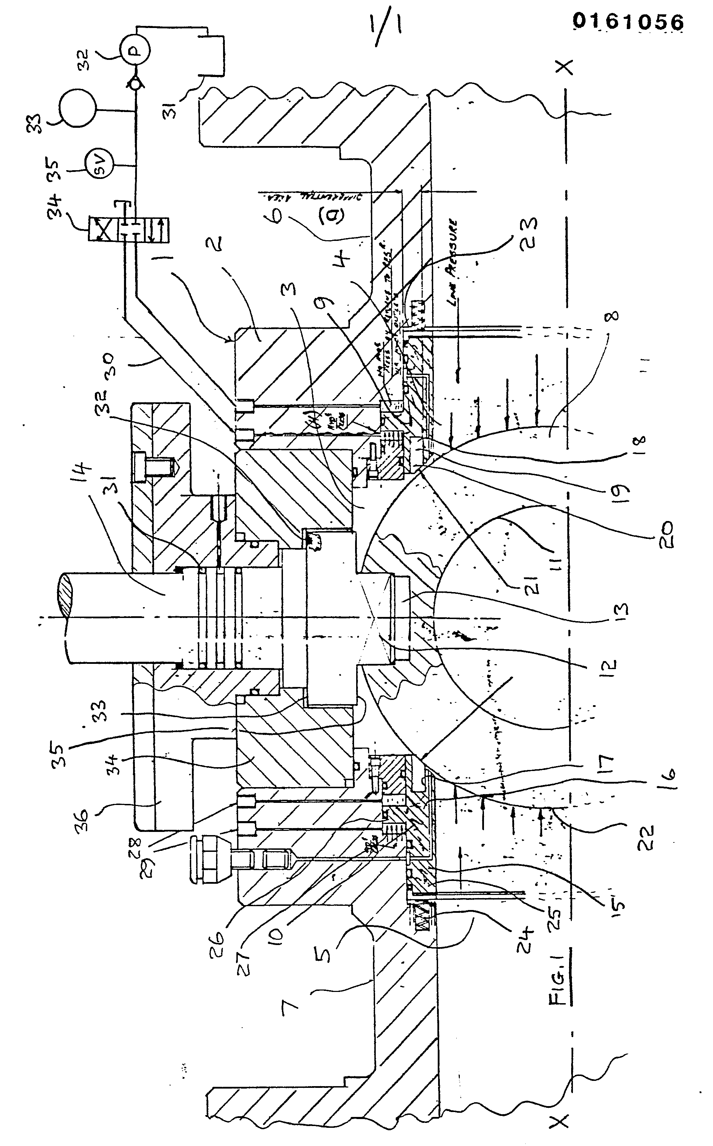

Fig. 1 is a partial longitudinal sectional elevation of a ball valve of the invention.

Fig. 1 shows a ball valve 1 comprising a valve body 2 defining a valve chamber 3 with inlet and outlet openings 4,5 respectively at opposite upstream and downstream ends 6,7 along its longitudinal axis X-X. A ball-shaped valve member 8 is mounted in the valve chamber 3 between two annular sealing means 9,10 around said openings 4,5 with a central through bore 11 concentric and of substantially equal internal diameter to, the openings 4,5. The valve member 8 has drivingly connected thereto via a spigot 12 and socket 13 connection a valve stem 14.

In more detail each said sealing means 9,10 comprises a ring-shaped seal support 15 having in one end 16 an annular slot 17 for housing one end 18 of an annular sealing element 19 whose other end 20 is radially inwardly bevelled to provide an inclined, preferably part spheroidal, sealing surface 21 for engagement with the part-spheroidal outer surface 22 of the valve member 8. The seal support 15 is slidably mounted in an annular recess 23 with a resilient biasing means in the form of helical springs 24 in engagement with its other end 25 so as to urge it axially against the valve member 8 in generally conventional manner.

The seal support is, however, additionally provided with a radially outwardly extending flange 26 which is reciprocably displacable in an annular cylinder chamber 27 provided with hydraulic fluid connections 28,29 of a hydraulic fluid circuit 30 (indicated schematically) formed and arranged for applying driving force to each side of the flange 26 for controlling movement of the seal support 15 as with a double acting piston and cylinder arrangement. The hydraulic circuit 30 is arranged to operate at a working pressure of 5000 p.s.i. so as to provide sufficient driving force to overcome the line pressure exerted on the seal support.

In Fig.1 the valve is essentially shown in its closed position with the valve member 8 orientated to close the inlet and outlet openings 4,5 with its outer surface 22, these openings being firmly sealed by the sealing elements 19 as shown in the left hand, down-stream, side of the drawing where the seal support 9 is shown in its sealing position.  In order to open the valve, the hydraulic circuit 30 is activated to drive the seal support 9 back against the line pressure exerted on its other end 25 and the spring 24, to its retracted position as shown in the right-hand part of the drawing.  Naturally in practice both seals would be operated synchronously and the illustration of the two different positions at the same time is simply for purposes of illustration and explanation. Once the seals have been retracted the valve member can be easily rotated, no longer being subject to any friction from the sealing means, via the valve stem 14 thereby reducing the operational and performance demands on the valve control system.  When the valve member has been rotated until its through bore is aligned with the openings i.e. the valve is in its open position, the sealing elements can be brought back into sealing engagement with the valve member around the through bore ends to provide a continuous sealed passage right through the valve.

Since the sealing element 19 is no longer subject to any significant frictional or other transverse or torsional forces, the design criteria relating thereto in particular the choice of suitable materials are considerably relaxed. Thus the sealing elements may be made of plastics materials, natural or synthetic rubber, or even metal.

With the reduced stresses imposed on the sealing means it will be appreciated that the working life thereof will be substantially increased and the need for maintenance thereof considerably reduced.  Thus the main service requirement becomes the maintenance and replacement of the valve stem seals 31.  This can now be readily achieved though without necessarily shutting down the pipeline by the use of a back seat seal 32 on a radially outer flange surface 33 of the valve stem 14 which engages with an inner canopy 34 immediately any line pressure is applied to the radially inner flange surface 35. This provides an important safeguard to maintenance personnel involved in removing the outer canopy 36 to provide access to the valve stem seals 31. Since such movement of the valve stem 14 tends to lead to a partial disengagement of the spigot and socket connection 12,13 with the valve member, re-engagement (after relief of the line pressure from below the valve stem) can present difficulties in conventional designs due to movement of the valve member. With the present design though these can be substantially avoided by virtue of the very accurate precise positioning of the valve member via its sealing means which can be achieved.

The hydraulic circuit 30 includes a reservoir 31, a pump 32 e.g. a hand pump for use in pressurizing the circuit via a non-return valve when ball-valve operation is required, a pressure accumulator 33, a change-over valve 34 and a safety valve 35. For simplicity the drawing shows the circuit to only one of the valve seal drive means but where both valve seals are in accordance with the present invention, the circuit would be connected to both so that both valve seals would operate in parallel with each other.

0161056

CLAIMS

1.  A ball valve (1) comprising a valve body (2) having a valve chamber (3) with first and second openings (4,5) at respective ends (6,7) along a longitudinal axis (X-X) of the valve (1), and a ball-shaped valve member (8) with a radially extending valve stem (14) adapted for rotation of said valve member (8) about an axis extending transversely of said longitudinal axis (X-X), said valve member (8) having a spheroidal outer surface (22) interrupted by a generally central through-bore (11) extending transversely of the valve stem axis for movement into and out of communication with said first and second openings (4,5) as said valve member (8) is rotated about the valve stem axis, each of said first and second openings (4,5) being provided with an annular sealing means (9,10) formed and arranged for sealing engagement with the valve member outer surface (22) in a closed position of the valve (1) wherein at least said sealing means (10) on an upstream side of the valve (1) is in the form of an annular sealing element (19) mounted in an annular seal support (15) mounted in said valve body (2) so as to be reciprocably displacable along the longitudinal valve axis (X-X) between a sealing position in which said sealing element (19) is held in sealing engagement with said valve member outer surface (22) and a retracted position, in which said sealing element is held spaced from said outer surface, a seal support-drive means (30) is formed and arranged for applying a driving force to said seal support (15), at least in the upstream direction for retraction of said seal support (15) towards its retracted position.

2.  A ball valve as claimed in Claim 1 wherein the drive means (20) comprises a piston means (26) connected to the seal support (15) and reciprocably displacable in a chamber (27) connected to a pressurized fluid supply (30).

3.    A ball valve as claimed in Claim 2 wherein the piston and chamber means (26,27) is formed and arranged to operate as a double acting piston.

4.    A ball valve as claimed in any one of Claims 1 to 3 wherein the downstream side sealing mans (9) also is of similar form to the upstream side sealing means (10).

5.    A ball valve as claimed in Claim 4 wherein the upstream and downstream side sealing means (9,10) are formed and arranged so as to be operated in parallel by the seal support drive means (30), whereby said sealing means (9,10) are driven into their sealing positions and into their retracted positions substantially simultaneously.

6.    A ball valve as claimed in any one of Claims 1 to 5 wherein said sealing element has an inclined sealing surface (21) formed and arranged for engagement with a generally correspondingly inclined portion of the valve member (8).

7.    A ball valve as claimed in Claim 6 wherein said sealing surface is part-spheroidal.

8.    A ball valve as claimed in any one of Claims 1 to 7 wherein the valve stem (14) is provided with an outwardly directed annular flange (33) and a back seat seal (32) on said flange (33) formed and arranged for sealing engagement with an opposed inner canopy (34) when said valve stem (14) subjected to an outward driving force upon exposure of an inwardly directed flange on said valve stem (14) to line pressure.

0161056

FIG. 1